# EUROPEAN PATENT APPLICATION

(11) **EP 2 952 735 A1**
(43) Date of publication of application: **09.12.2015**
(21) Application number: 14171383.4
(22) Date of filing: 05.06.2014
(51) Int. Cl.: F03D 1/06

(54) **A root bushing for a wind turbine rotor blade, a wind turbine rotor blade, a wind turbine and a method for manufacturing a wind turbine rotor blade for a wind turbine**

(71) Applicant: Siemens Aktiengesellschaft, 80333 München (DE)
(72) Inventor: Grove-Nielsen, Erik, 7870 Roslev (DK)

(57) **Abstract**

A root bushing (9) for a wind turbine rotor blade (5), wherein the root bushing (9) has a cylindrical shape with longitudinal grooves (15).

The root bushing has the advantage that a bonding area between the root bushing and the fiber composite material is enlarged in comparison to known cylindrical root bushings.

## Description

The present invention relates to a root bushing for a wind turbine rotor blade, to a wind turbine rotor blade, to a wind turbine and to a method for manufacturing a wind turbine rotor blade for a wind turbine.

Modern wind turbine rotor blades are built from fiber-reinforced plastics. A rotor blade typically comprises an airfoil having a rounded leading edge and a sharp trailing edge. The rotor blade is connected with its blade root to a hub of the wind turbine. The blade root comprises at least one or a plurality of root bushing. The root bushings can be provided with internal threads. Bolts are engaged with theses threads to connect the blade root to the hub. EP 1 486 415 A1 describes such a root bushing. The root bushings are embedded in the fiber composite material of the rotor blade. A mechanical anchoring between the root bushing and the fiber composite material can be achieved by sandblasting the surface of the root bushing or by providing circumferential grooves, for example.

It is one object of the present invention to provide an improved root bushing for a blade root of a wind turbine rotor blade.

Accordingly, a root bushing for a wind turbine rotor blade is provided. The root bushing has a cylindrical shape with longitudinal grooves.

The root bushing is advantageous in that a bonding area between the root bushing and the fiber composite material is enlarged in comparison to known cylindrical root bushings. Since the grooves are arranged in a longitudinal direction of the root bushing, no bonding zones between the root bushing and the surrounding fiber composite material are exposed to tensile loads perpendicular or close to perpendicular to the bonding surface. The entire surface of the root bushing is used to transmit shear forces from the root bushing to the fiber composite material. No fibers are loaded in the direction of -90° to the fiber direction. Thus, safer blades with less risk of root failure can be manufactured.

According to an embodiment, the grooves are arranged parallel to a middle axis of the root bushing. Preferably, the root bushing is symmetrically to the middle axis. Alternatively, the grooves may run angular to the middle axis.

According to a further embodiment, the root bushing has a circular cross-section. Alternatively, the root bushing may have an oval or rectangular cross-section.

According to a further embodiment, the root bushing has a central bore comprising a thread. A bolt can be engaged with the thread to connect the root bushing to the hub of the wind turbine.

According to a further embodiment, the grooves are evenly distributed on a circumference of the root bushing. Alternatively, the grooves may be distributed unevenly.

According to a further embodiment, the root bushing has a first face and a second face and wherein the first face is flat and the second face is tapered. The second face is preferably pointed to an end. This ensures flexibility of the root bushing.

According to a further embodiment, the grooves have a semicircular cross-section. Alternatively, the grooves may have a rectangular, triangular or any other desired cross-section. According to a further embodiment, the grooves have a sinusoidal cross-section. The root bushing may have different groove geometries like semicircular and sinusoidal cross-sections at the same time.

According to a further embodiment, the root bushing is wrapable with a unidirectional fiber weave such that roving yarns thereof are placed in the grooves of the root bushing. The unidirectional fiber weave comprises roving yarns that are stitched together by an elastic stitching yarn.

Further, a wind turbine rotor blade is provided, comprising such a root bushing according and a unidirectional fiber weave which is wrapped around the root bushing such that roving yarns thereof are placed in the grooves. The fiber weave can be embedded in a fiber composite material which gives the rotor blade its shape. The unidirectional fiber weave can be an interface between the root bushing and the fiber composite material. The unidirectional fiber weave is part of the fiber composite material.

According to an embodiment, the roving yarns of the unidirectional fiber weave are stitched together with an elastic stitching thread. The elastic stitching thread can be made of special spun thermoplastic polyester, natural rubber or polyurethane, for example.

According to a further embodiment, the unidirectional fiber weave is impregnated with a resin. The resin may be a thermoplastic or thermosetting material.

Further, a wind turbine with such a root bushing and/or such a wind turbine rotor blade is provided.

Further, a method for manufacturing a wind turbine rotor blade for a wind turbine is provided. The method comprises the steps of
a) providing a root bushing, wherein the root bushing has a cylindrical shape with longitudinal grooves,
b) providing a unidirectional fiber weave,
c) wrapping the unidirectional fiber weave around the root bushing such that roving yarns of the unidirectional fiber weave are placed in the grooves, and
d) impregnating the unidirectional fiber weave with a resin.

According to an embodiment, the unidirectional fiber weave is impregnated in a vacuum assisted resin transfer molding (VARTM) process. In the VAARTM process the dry fiber material is evacuated in a mold and then infiltrated with resin. After curing the resin, the component, i.e. the blade can be taken out of the mold.

"Wind turbine" presently refers to an apparatus converting the wind's kinetic energy into rotational energy, which may again be converted to electrical energy by the apparatus.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 is a perspective view of a wind turbine according to one embodiment;
Fig. 2 is a perspective view of a wind turbine rotor blade according to one embodiment;
Fig. 3 is an end view of the wind turbine rotor blade according to Fig. 2;
Fig. 4 is a side view of a root bushing for a root of the wind turbine blade according to Fig. 2;
Fig. 5 is an end view of the root bushing according to Fig. 4;
Fig. 6 is an enlarged view of the root bushing according to Fig. 4;
Fig. 7 is another enlarged view of the root bushing according to Fig. 4;
Fig. 8 is a sectional view of the root bushing according to Fig. 4;
Fig. 9 is an enlarged sectional view of the root bushing according to Fig. 8; and
Fig. 10 shows a block diagram of an embodiment of a method for manufacturing a wind turbine rotor blade.

In the Figures, like reference numerals designate like or functionally equivalent elements, unless otherwise indicated.

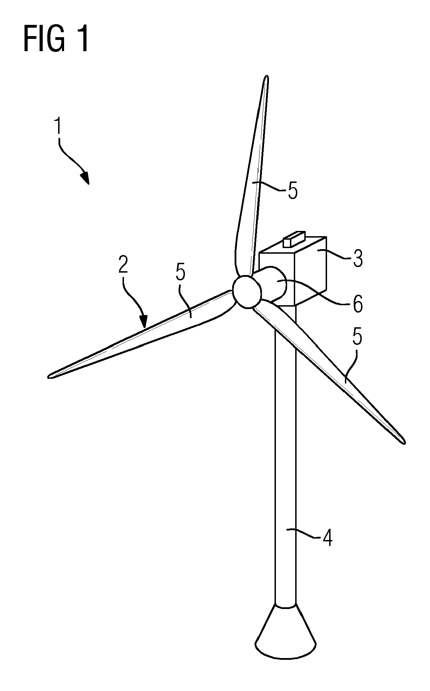

Fig. 1 shows a wind turbine 1 according to an embodiment.

The wind turbine 1 comprises a rotor 2 connected to a generator (not shown) arranged inside a nacelle 3. The nacelle 3 is arranged at the upper end of a tower 4 of the wind turbine 1.

The rotor 2 comprises three blades 5. The blades 5 are connected to a hub 6 of the wind turbine 1. Rotors 2 of this kind may have diameters ranging from, for example, 30 to 160 meters. The blades 5 are subjected to high wind loads. At the same time, the blades 5 need to be lightweight. For these reasons, blades 5 in modern wind turbines 1 are manufactured from fiber-reinforced composite materials. Therein, glass fibers are generally preferred over carbon fibers for cost reasons. Oftentimes, glass fibers in the form of unidirectional fiber mats are used.

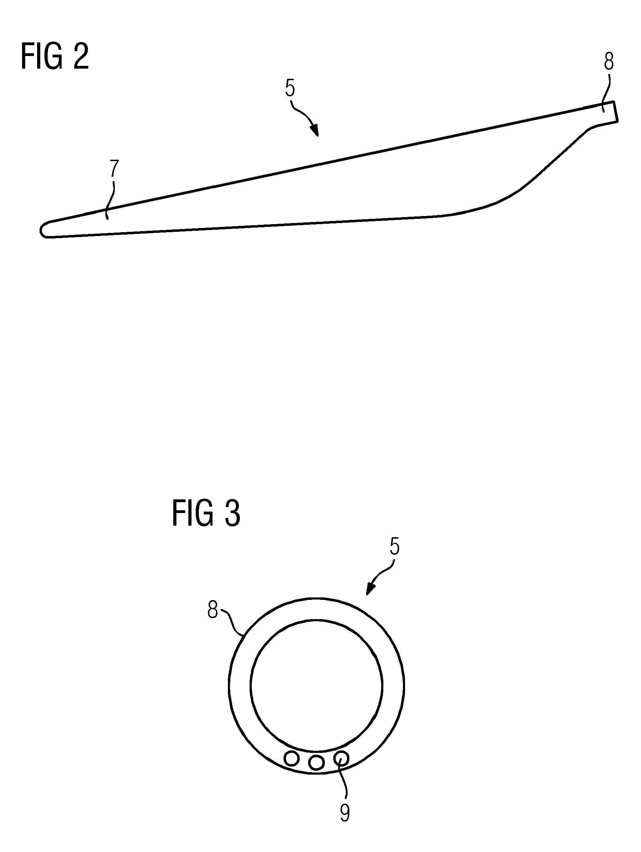

Fig. 2 shows a blade 5 according to one embodiment.

The blade 5 comprises an aerodynamically designed portion 7, which is shaped for optimum exploitation of the wind energy and a blade root 8 for connecting the blade 5 to the hub 6. The blade 5 may be fixed to the hub 6 by means of bolts.

Fig. 3 shows an end view of the blade root 8.

The blade root 8 comprises a plurality of root bushings 9 for a releasable connection of the blade 5 to the hub 6. The root bushings 9 are embedded in the blade root 8 so that bolts (not shown) can be screwed into an internal thread of the root bushings 9 for a firm but releasable engagement therewith. The number of root bushings 9 is arbitrarily. In Fig. 3 only three root bushings 9 are shown. Alternatively, the blade root 8 may comprise only one centrally arranged root bushing 9.

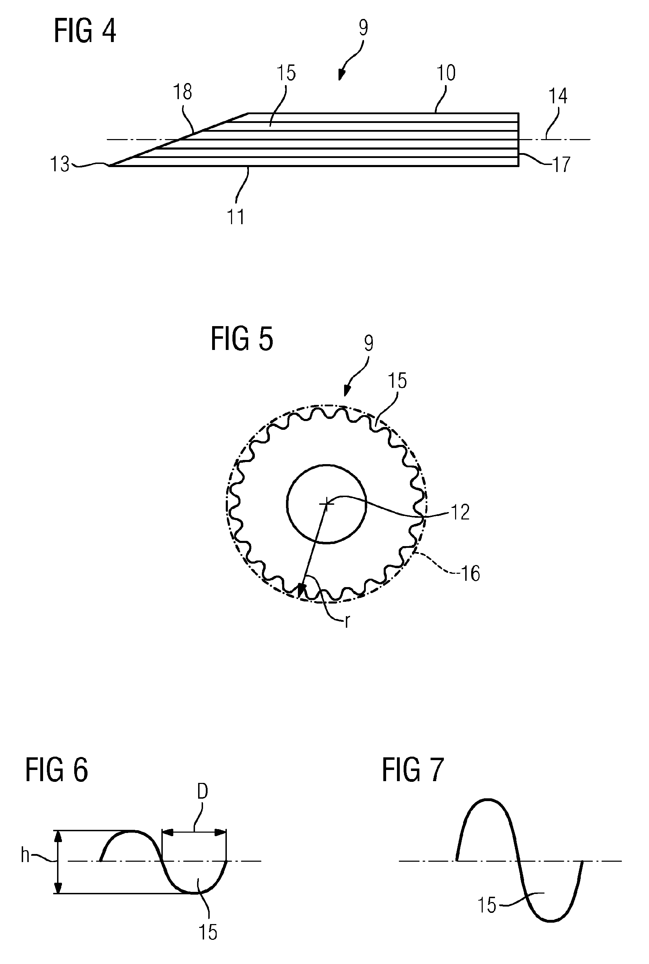

Fig. 4 is a side view of a root bushing 9. Fig, 5 is an end view of a root bushing 9.

In the following, Figs. 4 and 5 are referred to at the same time. The root bushing 9 has a circular cross-section. The root bushing 9 comprises a basic portion 10 and an extension portion 11. The basic portion 10 is cylindrical or tube shaped and has a central bore 12. The central bore 12 may protrude through the basic portion 10 and the extension portion 11. The central bore 12 comprises a thread for a bolt (not shown) that connects the blade root 8 to the hub 6. The extension portion 11 is slanted and has a gradually reduced cross-section to a pointed or nearly pointed end 13. Thus, the extension portion 11 has a gradually increased flexibility. Preferably, the basic portion 10 and the extension portion 11 are made of one piece. The root bushing 9 has a cylindrical shape. The root bushing 9 has a middle axis 14. The root bushing 9 may be made of a metal alloy.

The root bushing 9 has longitudinal notches or grooves 15. In Figs. 4 and 5 only one groove 15 has a reference sign. The grooves 15 are arranged parallel to the middle axis 14. Preferably, the grooves are evenly distributed on a circumference 16 of the root bushing 9. The root bushing has a first or distal face 17 and a second or proximal face 18. The second face 18 is slanted or tapered and pointed to the end 13. The grooves 15 may run parallel to the middle axis 14. Alternatively, the grooves 15 may run angled to the middle axis.

Fig. 6 shows the surface of the root bushing 9 in an enlarged view.

In one embodiment, shown in Fig. 6, the grooves 15 have a semicircular cross section. This means, the surface of the root bushing 9 comprises semicircular hills and valleys. Compared to a diameter D of the grooves 15, the circumferential length of the grooves 15 is n/2 or about 1.57 times the diameter D. This enlarges the surface of the root bushing 9 and enlarges the bonding area between the root bushing 9 and the fiber composite material in which it is embedded for about 57% compared to a root bushing without grooves. A peak to peak height h of the grooves 15 is preferably between 0.02 to 0.2 times the radius r of the root bushing 9 (Fig. 5).

Fig. 7 shows the surface of the root bushing 9 in an enlarged view.

In one embodiment, shown in Fig. 7, the grooves 15 have a sinusoidal cross section. This enlarges the surface of the root bushing 9 further. Alternatively, the grooves 15 may have a triangular, rectangular or any other desired geometrical shape.

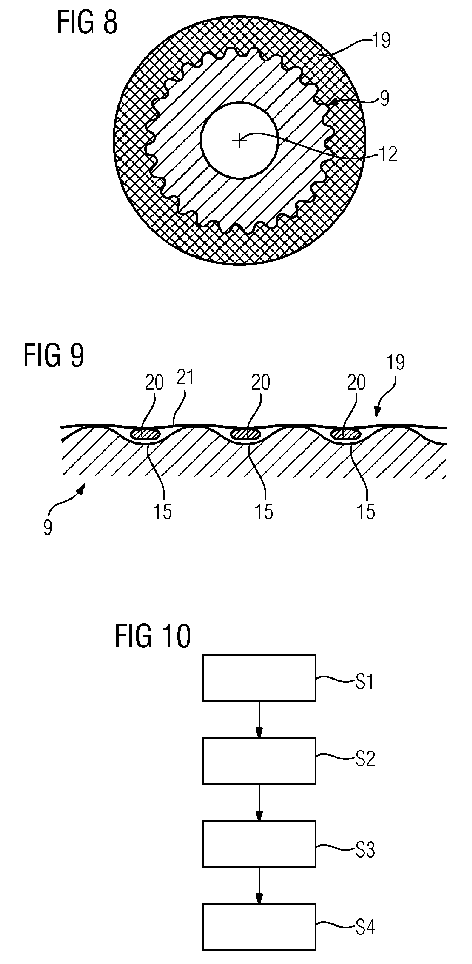

Fig. 8 shows the root bushing 9 in a cross-sectional view. Fig. 9 shows the root bushing 9 in an enlarged cross-sectional view

The root bushing 9 is wrapped with a unidirectional roving weave 19. The weave 19 comprises roving yarns 20 that are laid down in the grooves 15. During wrapping the weave 19 around the root bushing 9, the roving yarns are placed in the grooves 15. The roving yarns 20 are stitched together by an elastic stitching thread 21. After wrapping the unidirectional weave 19 around the root bushing 9 resin is injected in the weave 19, preferably in a vacuum assisted resin transfer molding technique.

Fig. 10 shows a block diagram of a method for manufacturing a wind turbine rotor blade 5 for a wind turbine 1.

In a step S1 the root bushing 9 is provided, wherein the root bushing 9 has a cylindrical shape with longitudinal grooves. The grooves can be cast or milled into a surface of the root bushing 9. The root bushing 9 preferably is made of "ductile iron". This material has a high impact and fatigue resistance due to its nodular graphite inclusions. One type of this material is the so-called ADI (austempered ductile iron).

In a step S2 the unidirectional fiber weave 19 is provided. The fiber weave 19 comprises the roving yarns 20 that are stitched together by the elastic stitching thread 21.

In a step S3 the unidirectional fiber weave 19 is wrapped around the root bushing 9 such that the roving yarns 20 of the unidirectional fiber weave 19 are placed in the grooves 15.

In a step S4 the unidirectional fiber weave 19 is impregnated with a resin. The resin may be a thermoset or a thermoplastic material. Preferably, the unidirectional fiber weave 19 is impregnated in a vacuum assisted resin transfer molding process. The unidirectional fiber weave 19 can be covered with several layers of composite material to form the blade 5.

The root bushing 9 is advantageous in that the bonding area is enlarged with minimum 57% (semicircular grooves 15) relative to known cylindrical root bushings. Since the grooves 15 are arranged in a longitudinal direction of the root bushing 9 no bonding zones between the root bushing 9 and the surrounding fiber composite material are exposed to tensile loads perpendicular or close to perpendicular to the bonding surface. The entire surface of the root bushing 9 is used to transmit shear forces from the root bushing 9 to the fiber composite material, i.e. the weave 19. No fibers are loaded in the direction of -90° to the fiber direction. Known root bushings are normally tapered. The tapered part has reduced shear force transmission capacity due to the angle of the tapered part. With the root bushing 9 as explained before this disadvantage is overcome due to the longitudinal grooves 15. Since the shear force transmission is more effective with the root bushing 9, less material is used and reduced costs for producing the blades 5 can be expected. Further, safer blades 5 with less risk of root failure can be manufactured.

Although the present invention has been described in accordance with preferred embodiments, it is obvious for the person skilled in the art that modifications are possible in all embodiments.

## Claims

1. A root bushing (9) for a wind turbine rotor blade (5), wherein the root bushing (9) has a cylindrical shape with longitudinal grooves (15).

2. The root bushing according to claim 1, wherein the grooves (15) are arranged parallel to a middle axis (14) of the root bushing (9).

3. The root bushing according to claim 1 or 2, wherein the root bushing (9) has a circular cross-section.

4. The root bushing according to one of claims 1 - 3, wherein the root bushing (9) has a central bore (12) comprising a thread.

5. The root bushing according to one of claims 1 - 4, wherein the grooves (15) are evenly distributed on a circumference (16) of the root bushing (9).

6. The root bushing according to one of claims 1 - 5, wherein the root bushing (9) has a first face (17) and a second face (18) and wherein the first face (17) is flat and the second face (18) is tapered.

7. The root bushing according to one of claims 1 - 6, wherein the grooves (15) have a semicircular cross-section.

8. The root bushing according to one of claims 1 - 6, wherein the grooves (15) have a sinusoidal cross-section.

9. The root bushing according to one of claims 1 - 8, wherein the root bushing (9) is wrapable with a unidirectional fiber weave (19) such that roving yarns (20) thereof are placed in the grooves (15) of the root bushing (9).

10. A wind turbine rotor blade (5), comprising a root bushing (9) according to one of claims 1 - 9 and a unidirectional fiber weave (19) which is wrapped around the root bushing (9) such that roving yarns (20) thereof are placed in the grooves (15).

11. The wind turbine rotor blade according to claim 10, wherein the roving yarns (20) of the unidirectional fiber weave (19) are stitched together with an elastic stitching thread (21).

12. The wind turbine rotor blade according to claim 10 or 11, wherein the unidirectional fiber weave (19) is impregnated with a resin.

13. A wind turbine (1) with a root bushing (9) according to one of claims 1 - 9 and/or a wind turbine rotor blade (5) according to one of claims 10 - 12.

14. A method for manufacturing a wind turbine rotor blade (5) for a wind turbine (1), comprising the steps of
a) providing (S1) a root bushing (9), wherein the root bushing (9) has a cylindrical shape with longitudinal grooves (15),
b) providing (S2) a unidirectional fiber weave (19),
c) wrapping (S3) the unidirectional fiber weave (19) around the root bushing (9) such that roving yarns (20) of the unidirectional fiber weave (19) are placed in the grooves (15), and
d) impregnating (S4) the unidirectional fiber weave (19) with a resin.

15. The method according to claim 14, wherein the unidirectional fiber weave (19) is impregnated in a vacuum assisted resin transfer molding process.
